# FASCICULE DE BREVET EUROPEEN

(11) **EP 3 255 332 B1**
(45) Date de publication et mention de la délivrance du brevet: **12.12.2018**
(21) Numéro de dépôt: 17174499.8
(22) Date de dépôt: 06.06.2017
(51) Int. Cl.: F16L 37/34

(54) **ELÉMENT DE RACCORD RAPIDE AVEC ORGANE DE DÉCHARGE ET RACCORD RAPIDE COMPRENANT UN TEL ÉLÉMENT DE RACCORD RAPIDE**
SCHNELLANSCHLUSSELEMENT MIT AUSLASSORGAN, UND SCHNELLANSCHLUSS MIT EINEM SOLCHEN SCHNELLANSCHLUSSELEMENT
QUICK COUPLING ELEMENT WITH DISCHARGE MEMBER AND COUPLING MEMBER COMPRISING SUCH A QUICK COUPLING ELEMENT

(30) Priorité: 07.06.2016 FR 1655186
(43) Date de publication de la demande: 13.12.2017
(73) Titulaire: Staubli Faverges, 74210 Faverges (FR)
(72) Inventeur: TIBERGHIEN, Alain-Christophe, 74320 SEVRIER (FR); DURIEUX, Christophe, 73200 GILLY SUR ISERE (FR); MOREL, Frédéric, 74210 LATHUILE (FR); SALLAZ, Mathieu, 74290 TALLOIRES-MONTMIN (FR)
(74) Mandataire: Lavoix

(56) Documents cités:
- CN-A- 104 567 521
- DE-A1- 4 114 480
- US-A- 4 989 630

## Description

L'invention a trait à un élément de raccord rapide utilisé pour la jonction amovible de canalisations de fluide sous pression et qui comprend, entre autres, un organe de décharge de son canal interne. L'invention a également trait à un raccord rapide incorporant un tel élément de raccord.

Dans le domaine des raccords pour canalisations de fluide sous pression, il peut se poser un problème de sécurité qui apparait lorsque la pression résiduelle dans une canalisation de fluide raccordée à un élément de raccord atteint une valeur élevée, par exemple lorsque la température d'un fluide contenu dans cette canalisation augmente, ce qui induit une augmentation de la pression dans cette canalisation. En cas de pression importante dans le volume interne d'un élément de raccord, il peut être difficile d'accoupler les deux éléments d'un raccord pour connecter deux conduites. Dans certains cas, une telle surpression peut endommager certains composants d'un circuit relié à une conduite en surpression.

Pour résoudre ce problème, il est connu, par exemple de US-A-4 703 774 ou de CN-A-104 567 521, d'installer au sein d'une soupape de fermeture d'un élément de raccord, une bille soumise, d'une part, à la pression régnant au sein de cet élément de raccord et, d'autre part, à l'action d'un ressort de rappel et de la pression ambiante. Cette bille forme un clapet de décharge de l'élément de raccord en cas de surpression. Elle permet de limiter la pression du fluide au sein de l'élément de raccord. Cette solution est adaptée à un raccord sous-marin, tel que celui envisagé dans US-A-4 703 774, qui peut être de dimensions relativement importantes. En revanche, elle est difficile à mettre en oeuvre avec un raccord de dimensions réduites car l'espace disponible au centre de l'élément de raccord peut être insuffisant pour loger une bille de taille adaptée. En outre, la plage de fonctionnement du clapet de décharge formée par la bille est relativement limitée. Une pression importante est nécessaire au sein de l'élément de raccord pour décoller la bille de son siège, c'est-à-dire pour déclencher la décharge du fluide, à l'encontre de l'action exercée par le ressort de rappel.

Par ailleurs, les éléments de raccord connus de DE-A-41 14 480 ou de US-A-4 989 630, qui sont dépourvus d'organe de décharge, ne permettent pas de réagir à une augmentation de pression dans le canal interne de ces éléments de raccord.

C'est à ces inconvénients qu'entend plus particulièrement remédier l'invention en proposant un nouvel élément de raccord rapide dans lequel la jonction de décharge peut être réalisée de façon fiable, y compris pour des raccords de diamètre relativement faible, et en élargissant la plage de fonctionnement du ou des organes de décharge.

A cet effet, l'invention concerne un élément de raccord rapide pour la jonction amovible de canalisations de fluide sous pression, cet élément comprenant un corps tubulaire, définissant un canal interne de passage de fluide sous pression et un axe longitudinal de l'élément de raccord, ainsi que des moyens d'obturation du canal interne du côté d'une face avant de l'élément de raccord. Cet élément de raccord comprend également un organe de décharge du canal interne, lequel élément de décharge est mobile entre une première position, dans laquelle il obture un passage de décharge reliant le canal interne à l'extérieur du corps, et une deuxième position avancée par rapport à la première position, dans laquelle il n'obture pas ce passage de décharge. Conformément à l'invention, l'organe de décharge est une bague de décharge qui fait partie des moyens d'obturation du canal interne et qui est montée autour d'un organe central, qui fait également partie de ces moyens d'obturation, et à l'intérieur d'une pièce périphérique. En outre, une première surface de la bague de décharge fait partie de la face avant. La bague de décharge est mobile, par rapport à l'organe central et parallèlement à l'axe longitudinal, entre ses première et deuxième positions. La bague de décharge définit, au moins en partie, le passage de décharge avec l'organe central ou avec la pièce périphérique. Dans sa première position, la bague de décharge est en appui étanche contre l'organe central, sur une première circonférence d'étanchéité, et en appui étanche contre la pièce périphérique, sur une deuxième circonférence d'étanchéité. Un diamètre de la deuxième circonférence d'étanchéité est strictement supérieur à un diamètre de la première circonférence d'étanchéité. De plus, l'élément de raccord comprend un organe de rappel élastique de la bague d'étanchéité vers sa première position. Cet organe élastique repousse la bague de décharge vers l'intérieur du corps tubulaire et/ou vers l'arrière de l'élément de raccord.

Grâce à l'invention, la bague de décharge, qui a par construction une forme annulaire, présente, du côté du canal interne de l'élément de raccord, une deuxième surface qui est définie radialement entre la première circonférence d'étanchéité et la deuxième circonférence d'étanchéité, avec une aire de section d'étanchéité suffisante pour que la pression du fluide présent dans ce canal interne agisse efficacement à l'encontre de l'organe de rappel élastique pour faire passer la bague de décharge de sa première position axiale vers sa deuxième position axiale, lorsque cela est nécessaire compte tenu de la valeur de cette pression. L'aire de cette deuxième surface peut être supérieure à l'aire d'une portion de bille exposée à la pression interne d'un élément de raccord, sans avoir à augmenter le diamètre de cet élément de raccord. L'invention est donc adaptée aux raccords de diamètre relativement faible, notamment un raccord de diamètre de passage interne inférieur ou égal à 25 mm. En outre, compte tenu de la géométrie de la bague de décharge, celle-ci peut être déplacée de sa première position vers sa deuxième position sous l'effet d'une pression interne de l'élément de raccord relativement faible. L'invention permet donc d'optimiser les plages de fonctionnement de l'organe de décharge qui est distinct d'un clapet qui appartient également aux moyens d'obturation du canal interne et qui assure une fonction différente de ce canal. En effet, le clapet permet d'isoler le canal interne de l'extérieur ou de mettre en communication le canal interne avec un canal interne d'un autre élément de raccord, alors que la bague de décharge permet d'évacuer du fluide vers l'extérieur lorsqu'une surpression apparait dans le canal interne, tandis que le clapet obture ce canal.

Au sens de l'invention, un diamètre d'une circonférence d'étanchéité est un diamètre égal à celui de cette circonférence si cette circonférence est d'épaisseur radiale nulle. Si la circonférence d'étanchéité a une épaisseur radiale non nulle, un diamètre de cette circonférence est un diamètre dont la valeur est comprise entre le diamètre minimum et le diamètre maximum de cette circonférence d'étanchéité.

Selon des aspects avantageux mais non obligatoires de l'invention, un tel élément de raccord peut incorporer une ou plusieurs des caractéristiques suivantes, prises selon toute combinaison techniquement admissible :
- Les moyens d'obturation du canal interne du côté de la face avant comprennent un clapet mobile, le long de l'axe longitudinal, entre une première position de fermeture, où il obture le canal interne, et une deuxième position reculée par rapport à sa première position, où il définit un passage annulaire de mise en communication du canal interne avec un canal interne d'un élément de raccord complémentaire, alors que la bague de décharge est distincte du clapet et mobile, le long de l'axe longitudinal, de sa première position vers sa deuxième position, sous l'effet de la pression de fluide au sein du canal interne.
- Dans sa première position, la bague de décharge est en appui, selon une direction parallèle à l'axe longitudinal, contre un siège d'étanchéité formée par l'organe central et obture le passage de décharge qu'elle définit avec l'organe central.
- Les moyens d'obturation comprennent, en outre, un clapet qui est positionné, radialement à l'axe longitudinal, entre l'organe central et le corps, ce clapet formant la pièce périphérique et entourant la bague de décharge au niveau de la face avant.
- Les moyens d'obturation comprennent, en outre, un clapet qui est positionné, radialement à l'axe longitudinal, entre l'organe central et le corps et qui est positionné, au niveau de la face avant, radialement à l'intérieur de la bague de décharge.
- Dans la deuxième position de la bague de décharge, le passage de décharge s'étend entre le clapet et la bague de décharge.
- Le corps tubulaire forme la pièce périphérique et définit avec la bague de décharge le passage de décharge que la bague de décharge obture lorsqu'elle est dans sa première position et en appui étanche avec le corps tubulaire.
- L'organe central est solidaire du corps et comprend une surface qui constitue une partie de la face avant.
- L'organe central et la bague de décharge appartiennent à un équipage mobile, parallèlement à l'axe longitudinal et par rapport au corps, entre une position avancée, où l'équipage mobile est en contact étanche avec le corps et obture le canal interne, et une position reculée, où un passage de fluide est ménagé entre l'équipage mobile et le corps.
- Dans sa première position, la bague de décharge est en appui, sur la première circonférence d'étanchéité, contre une surface de l'organe central qui est tronconique et convergente en direction de la face avant.
- La surface tronconique a un angle au sommet compris entre 60 et 120°.
- En configuration désaccouplée de l'élément de raccord, le passage de décharge débouche sur la face avant.
- En configuration désaccouplée de l'élément de raccord et lorsque la bague de décharge est dans sa première position, des faces avant respectives des moyens d'obturation sont alignées dans un plan perpendiculaire à l'axe longitudinal.

Selon un deuxième aspect, l'invention concerne également un raccord rapide pour la jonction amovible de canalisations de fluide sous pression, ce raccord comprenant un élément de raccord femelle et un élément de raccord mâle complémentaire. Conformément à l'invention, l'un au moins de ces éléments de raccord est tel que mentionné ci-dessus.

De façon avantageuse, en configuration accouplée du raccord, au moins un organe mécanique d'obturation du canal interne de l'élément de raccord est dans une position reculée, où il définit avec le corps de cet élément de raccord un passage annulaire pour le fluide sous pression. Selon les modes de réalisation envisagés l'organe mécanique d'obturation du canal interne qui a cette fonction peut être le clapet, la bague de décharge, l'ensemble formé par le clapet et la bague de décharge ou tout autre moyen d'obturation. Cet organe mécanique d'obturation ouvre, en configuration accouplée du raccord, un passage d'écoulement du fluide présent dans le canal interne d'un premier élément du raccord, vers le canal interne du deuxième élément complémentaire du raccord. Ce passage est formé entre l'organe mécanique d'obturation et le corps ou entre cet organe mécanique d'obturation et l'organe central.

L'invention sera mieux comprise et d'autres avantages de celles-ci apparaitront plus clairement à la lumière de la description qui va suivre de cinq modes de réalisation d'un élément de raccord conforme à son principe donné uniquement à titre d'exemple et faite en référence aux dessins annexés dans lesquels :
- la figure 1 est une coupe axiale d'un raccord conforme à l'invention comprenant un élément de raccord femelle également conforme à l'invention,
- la figure 2 est une vue à plus grande échelle du détail II à la figure 1,
- la figure 3 est une vue en perspective éclatée d'un sous-ensemble interne de l'élément femelle du raccord de la figure 1,
- la figure 4 est une vue analogue à la figure 2 lorsqu'une bague de décharge est dans une configuration différente de celle de la figure 2,
- la figure 5 est une coupe partielle selon la ligne V-V à la figure 4,
- la figure 6 est une coupe comparable à la figure 1, mais à plus petite échelle, en cours d'accouplement des éléments mâle et femelle du raccord,
- la figure 7 est une coupe analogue à la figure 6, lorsque les éléments du raccord sont accouplés,
- la figure 8 est une coupe axiale d'un élément mâle de raccord conforme à un deuxième mode de réalisation de l'invention,
- la figure 9 est une coupe axiale selon les lignes IX-IX à la figure 8, on y indique en VIII-VIII le plan de coupe de la figure 8,
- la figure 10 est une coupe longitudinale d'un élément de raccord conforme à un troisième mode de réalisation de l'invention,
- la figure 11 est une vue à plus grande échelle du détail XI à la figure 10,
- la figure 12 est une vue de détail analogue à la figure 11 pour un élément de raccord conforme à un quatrième mode de réalisation de l'invention,
- la figure 13 est une vue de détail analogue à la figure 11 pour un élément de raccord conforme à un cinquième mode de réalisation et
- la figure 14 est une vue de détail analogue à la figure 11 pour un élément de raccord conforme à sixième mode de réalisation.

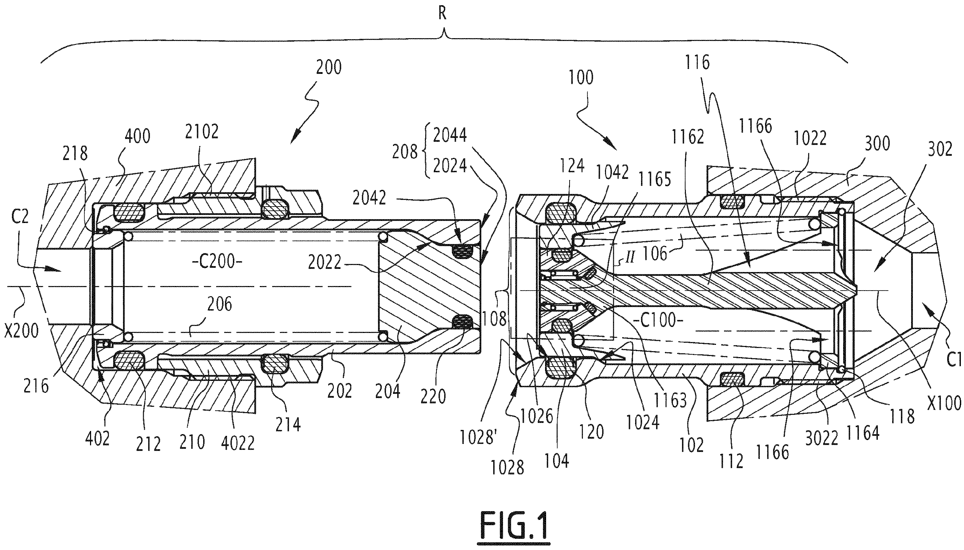

Le raccord R représenté aux figures 1 à 7 comprend un élément femelle de raccord 100 et un élément mâle de raccord 200 destinés à s'emmancher l'un dans l'autre.

L'élément mâle 200 comprend un corps 202 qui définit un axe longitudinal X200 de l'élément mâle 200 et à l'intérieur duquel est monté un clapet 204 chargé élastiquement par un ressort 206 en direction d'un siège 2022 formé par une surface radiale interne du corps 202, laquelle est tronconique et convergente en direction de la face avant 208 de l'élément de raccord 200.

Dans cette description, on définit la direction avant d'un élément de raccord comme la direction orientée dans le sens de l'emmanchement ou accouplement, c'est-à-dire vers l'élément de raccord complémentaire lorsque ceux-ci sont alignés et prêts à être emmanchés comme représenté à la figure 1. A l'inverse, on définit la direction arrière d'un élément raccord comme la direction opposée à l'élément de raccord complémentaire. Cette direction arrière est tournée vers une canalisation à l'extrémité de laquelle est monté l'élément de raccord. La partie proximale d'un élément de raccord est sa partie située sur l'arrière, alors que la partie distale d'un élément de raccord est sa partie située vers l'avant.

Le corps 202 de l'élément mâle 200 définit un canal interne C200 de circulation de fluide sous pression, qui est raccordé fluidiquement à une canalisation C2 à l'extrémité de laquelle est monté l'élément 200. Dans l'exemple, la canalisation C2 est réalisée dans un bâti 400 qui comprend un logement 402 dans lequel débouche la canalisation C2 et dans lequel est reçue une partie arrière de l'élément mâle 200 qui est immobilisée dans ce logement par une bague 210 dont un filet externe 2102 vient en prise avec un taraudage 4022 du logement 402. Deux joints d'étanchéité 212 et 214 sont respectivement prévus entre la partie arrière du corps 202 et la surface périphérique du logement 402, d'une part, et entre la surface périphérique externe du corps 202 et la bague 210. Une bague 216 est immobilisée dans la partie arrière du corps 202 au moyen d'un circlip 218. Cette bague 216 sert de butée au ressort 206 qui peut efficacement plaquer le clapet 204 contre le siège 2022. Le clapet 204 est équipé d'une gorge périphérique externe 2042 dans laquelle est inséré un joint d'étanchéité 220 qui assure l'isolation entre le canal C200 et l'extérieur de l'élément mâle 200, vers l'avant de l'élément mâle de raccord 200 au-delà du siège 2022 par rapport à ce canal.

La face avant 208 est formée de deux portions constituées respectivement par la face avant 2044 du clapet 204, laquelle est en forme de disque et centrée sur l'axe X200, et de la face avant 2024 du corps 202, laquelle est de forme annulaire, également centrée sur l'axe X200 et qui entoure la face avant 2044.

L'élément femelle 100 du raccord R comprend, quant à lui, un corps 102 qui est vissé dans un logement 302 d'un bâti 300. Le corps 302 définit un canal interne C100 de l'élément femelle 100 dans lequel peut circuler le fluide sous pression, ainsi qu'un axe longitudinal X100 de cet élément femelle. Le corps 102 est pourvu d'un filetage externe 1022 qui coopère avec un taraudage 3022 du logement 302. Un joint d'étanchéité 112 est intercalé entre la surface périphérique externe du corps 102 et la surface périphérique du logement 302.

Le bâti 300 définit une canalisation C1 qui débouche dans le logement 302 et qui est en communication permanente avec le canal interne C100.

L'élément femelle de raccord 100 comprend un clapet 104 qui est chargé élastiquement par un ressort 106 en direction d'un siège 1024 formé par une surface tronconique interne du corps 102, cette surface étant convergente vers l'avant de l'élément femelle de raccord 100. Le clapet 104 est pourvu d'une jupe arrière 1042 configurée pour venir en appui contre le siège 1024 lorsque l'élément femelle de raccord 100 est en configuration fermée, c'est-à-dire lorsque le clapet 104 est dans une première position où il isole le canal interne C100 de l'extérieur de l'élément femelle de raccord 100. Un joint d'étanchéité 120 est disposé dans une gorge périphérique interne 1026 du corps 102, qui est alignée axialement, le long de l'axe X100, avec le clapet 104 en configuration fermée de l'élément femelle de raccord 100. Ainsi, le joint d'étanchéité 120 contribue à isoler le volume C100 de l'extérieur. Un poussoir 116 est immobilisé dans le corps 100 et comprend une tige 1162 ainsi qu'une embase 1164 disposée à l'arrière de la tige 1162 et qui est percée de quatre orifices 1166 qui mettent en communication fluidique permanente le logement 302 et le canal interne C100. Le poussoir 116 est immobilisé dans le corps 102 au moyen d'un circlip 118. Le ressort 106 est en appui sur l'embase 1164 du poussoir 116. Le poussoir 116 comprend également une collerette 1163 ménagée sur l'avant de la tige 1162 ainsi qu'un nez 1165 qui prolonge la tige 1162 au-delà de la collerette 1163 et qui est pourvu d'une gorge périphérique externe 1167 et de trois rainures longitudinales 1169 régulièrement réparties autour de l'axe X100. On note 1168 la face d'extrémité du poussoir 116 opposée à l'embase 1164 qui est en forme de disque et qui constitue la face avant du poussoir 116.

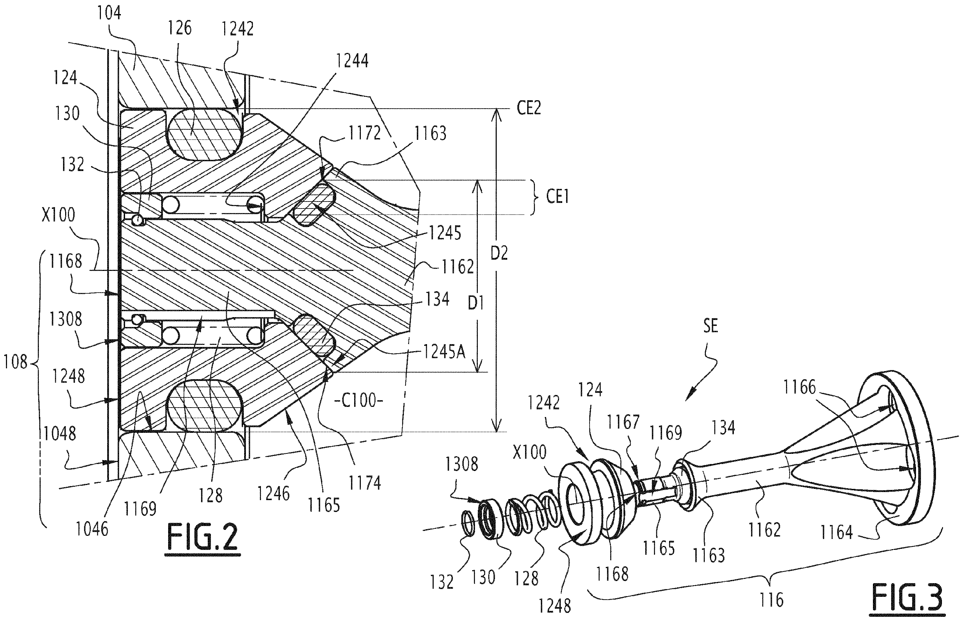

Un bague de décharge 124, distincte du clapet 104, est montée autour du nez 1165 du poussoir 116 et définit une gorge périphérique externe 1242 dans laquelle est logé un joint d'étanchéité 126 qui vient en appui contre une surface radiale interne 1046 du clapet 104 lorsque celui-ci est en configuration de fermeture du canal interne C100. Pour la clarté du dessin, le joint d'étanchéité 126 n'est pas représenté à la figure 3.

Un ressort 128 est monté autour du nez 1165, à l'intérieur de la bague de décharge 124, et vient en appui, sur l'arrière, contre un épaulement interne 1244 de la bague de décharge 124 et, sur l'avant, contre une bague d'arrêt 130, elle-même retenue sur le poussoir 116 grâce à un circlip 132 en prise dans la gorge 1167.

Un joint d'étanchéité 134 est disposé dans une gorge 1172 ménagée dans une surface tronconique 1074 qui délimite la collerette 1163 vers l'avant, c'est-à-dire du côté de la face 1168 du poussoir 116. La surface 1174 est convergente vers l'avant, en direction de l'axe X100 et l'on note α son angle sommet. La valeur de cet angle α est comprise entre 60 et 120°, de préférence de l'ordre de 90°.

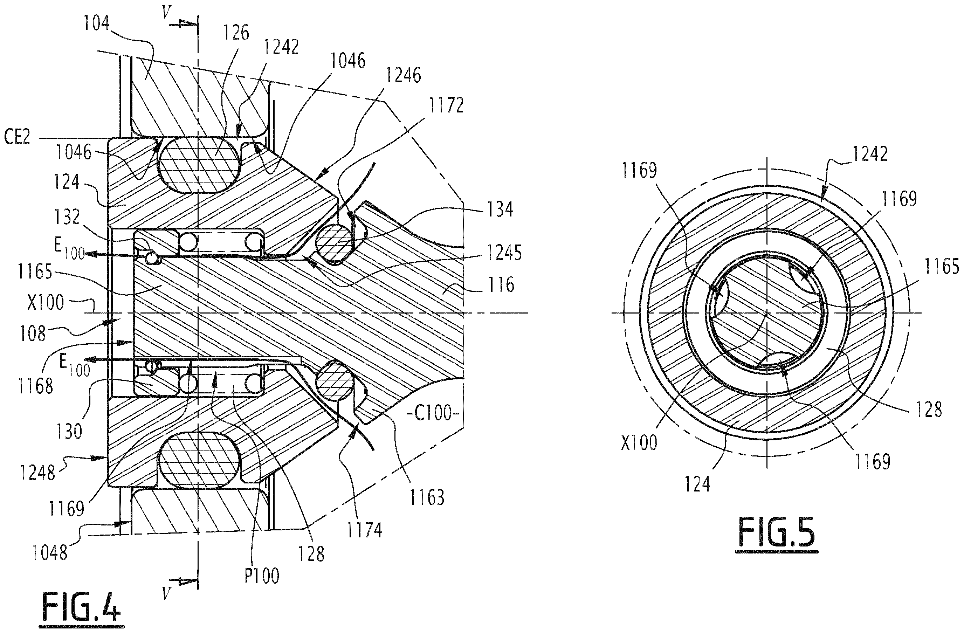

Les différents joints d'étanchéité des éléments femelle 100 et mâle 200 sont, de préférence, réalisés en élastomère synthétique ou naturel. En pratique, les joints d'étanchéité sont des joints toriques à section circulaire lorsqu'ils ne sont pas contraints, ce qui est visible, par exemple, pour le joint 134 à la figure 4. Les autres pièces de ces éléments de raccord sont, de préférence, réalisées en métal ou en matériau composite.

On note 1308 la surface annulaire de la bague d'arrêt 130 opposée au ressort 128. On note 1248 la surface annulaire de la bague d'étanchéité 124 ménagée sur l'avant de cette bague et qui est disposée à l'opposé de la collerette 1163 en configuration montée de l'élément femelle de raccord 100. On note 1048 la surface annulaire du clapet 104 opposé au ressort 106. On note 1028 une surface tronconique du corps 102 qui délimite ce corps sur l'avant, à l'opposé du filetage 1022. La surface 1028 est convergente vers l'avant. On note enfin 1028' une surface tronconique avant du corps 102 qui est divergente vers l'avant et qui est située, axialement le long de l'axe X100, entre l'avant du corps 102 et la gorge 1026.

Les surfaces 1168, 1308, 1248, 1048, 1028' et 1028 sont concentriques et constituent ensemble la face avant 108 de l'élément femelle de raccord 100. Plus précisément, la surface 1028 entoure radialement la surface 1028', qui entoure radialement la surface 1048, qui entoure radialement la surface 1248, qui entoure radialement la surface, 1308 qui entoure radialement la surface 1168, qui est centrée sur l'axe X100. En pratique, toutes les surfaces 1168, 1308, 1248, 1048 et 1028' sont centrées sur l'axe X100.

Les corps 102 et 202 sont chacun globalement cylindrique et creux, avec une section circulaire. De même, les clapets 104 et 204, le poussoir 107 et les bagues 124 et 130 sont à section circulaire, la section circulaire de l'embase 1164 et celle du nez 1165 étant modifiées pour créer les orifices 1166 et les rainures 1169.

Dans la configuration désaccouplée du raccord représenté aux figures 1 et 2, une surface arrière tronconique 1245 de la bague de décharge 124 est en appui à la fois contre le joint 134 et en regard et/ou en appui contre la surface 1174 du poussoir 116. La surface 1174, qui est fixe par rapport au corps 102 comme le poussoir 116 auquel elle appartient, forme un siège de réception de la surface tronconique 1245, ce siège étant équipé du joint 134. La surface tronconique 1245 est convergente vers l'avant de la bague de décharge 124, c'est-à-dire en direction de sa face avant 1248 et présente un angle au sommet égal, aux tolérances de fabrication prés, à l'angle α. Dans cette configuration, la bague de décharge 124 est en appui étanche contre le poussoir 116 sur une circonférence d'étanchéité CE1 de forme annulaire et dont on note D1 le diamètre maximum. Ce diamètre maximum est, en pratique, très proche du, ou égal au, diamètre maximum du joint 134 lorsqu'il est comprimé entre les pièces 116 et 124. Le diamètre minimum de la circonférence d'étanchéité CE1 est très proche du, ou égal au, diamètre minimum du joint 134 dans cette configuration. Ainsi, la circonférence CE1 est de forme annulaire et tronconique, avec une épaisseur radiale non nulle.

Par ailleurs, et toujours dans cette configuration, la bague d'étanchéité 124 est en contact étanche, par l'intermédiaire du joint 126 qu'elle porte et sur une deuxième circonférence d'étanchéité CE2, avec la surface radiale interne 1046 du clapet 104. Comme la surface radiale interne 1046 du clapet 104 est radiale à l'axe X100, l'épaisseur radiale de la circonférence CE2 et nulle ou, en pratique, quasi nulle. On note D2 le diamètre de la circonférence d'étanchéité CE2, qui est en pratique égal au diamètre de la surface radiale interne 1046 du clapet 104. Un contact étanche entre deux pièces du raccord, ou un appui étanche entre ces deux pièces, peut être défini par rapport à deux surfaces en vis-à-vis des pièces. Il existe un jeu qui est comblé par un ou plusieurs moyens d'étanchéité intermédiaires qui participent à la fonction d'étanchéité entre les deux pièces. Autrement dit une pièce est en contact étanche contre ou avec une autre pièce si leur contact direct suffit à réaliser une fonction d'étanchéité, ou s'il existe des moyens d'étanchéité qui comblent le jeu entre ces deux pièces, notamment au niveau d'une circonférence d'étanchéité.

Le diamètre D2 est strictement supérieur au diamètre D1, ce qui correspond au fait que la circonférence CE2 est plus éloignée de l'axe X100 que la circonférence CE1 et que ces circonférences sont disjointes.

Une surface arrière 1246 de la bague de décharge 124, dont l'aire est non nulle, est exposée à la pression régnant dans le canal C100. La pression C100 s'exerce également sur la portion 1245A de la surface 1245 qui s'étend radialement au-delà du joint 134 dans la configuration des figures 1 et 2. Au total, la pression dans le canal C100 s'exerce sur la bague de décharge 124, sur une surface équivalente à la différence des aires des sections définies par les diamètres extérieurs des joints 126 et 134.

La surface 1246 est tronconique et convergente vers l'arrière, c'est-à-dire à l'opposé de la surface 1248.

Le fonctionnement de l'élément de raccord 200 est le suivant :
Dans la configuration représentée aux figures 1 et 2, les faces avant 1168, 1308, 1248 et 1048 sont alignées dans un plan perpendiculaire à l'axe X100.

En configuration désaccouplée, les organes 104, 116 et 124 obturent l'ouverture avant du corps 102 qui est bordé par le joint 120. En particulier, le ressort 128 repousse la bague de décharge 124 au contact du joint 134 et de la surface 1174. Compte tenu de la présence des joints 120, 126 et 134, le canal interne C100 est isolé de l'extérieur de l'élément de raccord 100.

On considère le cas où la canalisation C1 est reliée à une installation électronique qu'il convient de refroidir avec un fluide caloporteur. En configuration désaccouplée des éléments 100 et 200 du raccord R, la température de ce fluide caloporteur peut augmenter sous l'effet de la dissipation de chaleur provenant de composants électroniques de l'installation précitée. Dans ce cas, la pression du fluide caloporteur au sein du canal interne C100 augmente. Cette pression s'exerce notamment sur la surface arrière 1246 de la bague de décharge 124, et sur la portion 1245A de la surface 1245, la somme de ces surfaces ayant une aire non nulle.

Lorsque l'effort de pression exercé sur les surfaces 1246 et 1245A est suffisant pour vaincre l'effort de rappel élastique exercé par le ressort 128, la bague de décharge 124 est déplacée de sa première position représentée à la figure 2 jusque dans sa deuxième position représentée à la figure 4, dans laquelle la surface 1245 est écartée de la surface 1174 et du joint 134. Le fluide présent dans le canal interne C100 peut alors s'écouler entre les surfaces 1245 et 1174 en regard, puis à l'intérieur de la bague de décharge 124 jusqu'à déboucher au niveau de la face avant 108 de l'élément femelle raccord 100, autour de la surface 1168. A la figure 4, les flèches E₁₀₀ représentent l'écoulement théorique du fluide dans un passage de décharge P100 qui est défini entre les pièces 116 et 124. Cet écoulement E₁₀₀ à travers le passage P100 est rendu normalement possible lorsque la bague de décharge 124 est dans sa deuxième position. Comme visible en partie basse de la figure 4, ce passage de décharge P100 inclut les rainures 1169, en aval de la surface tronconique 1245. On remarque toutefois en partie supérieure de la figure 4 que le fluide peut également s'écouler dans le passage de décharge P100 autour du nez 1165 en dehors des rainures 1169, car le montage de la bague d'arrêt 130 autour du nez 165 n'est pas étanche.

Au cours du déplacement de la bague de décharge 124 autour du poussoir 116 et le long de l'axe X100, entre sa première position axiale représentée à la figure 2 et sa deuxième position axiale représentée à la figure 4, le joint d'étanchéité 126 reste en contact avec la surface radiale interne 1046 du clapet 104 au niveau de la circonférence CE2, de sorte que l'étanchéité entre ce clapet 104 et la bague de décharge 124 reste assurée.

Lorsque la pression au sein du canal C100 a diminué du fait de l'évacuation d'une partie du fluide à travers le canal de décharge P100 identifié ci-dessus, le ressort 128 est capable de repousser la bague 124 vers l'arrière, c'est-à-dire de la faire passer de sa deuxième position axiale représentée à la figure 4 à sa première position axiale représentée à la figure 2. Le canal de décharge P100 est alors fermé et le conduit interne C100 à nouveau isolé de l'extérieur de l'élément femelle de raccord 100.

Les pièces 116 et 124 à 134 forment un sous-ensemble télescopique SE de l'élément de raccord femelle 100 qui est visible à la figure 3, à l'exception de la représentation du joint 126, et qui permet de contrôler la décharge vers l'extérieur d'une partie du fluide contenu dans le canal C100, en fonction de la pression du fluide dans ce canal.

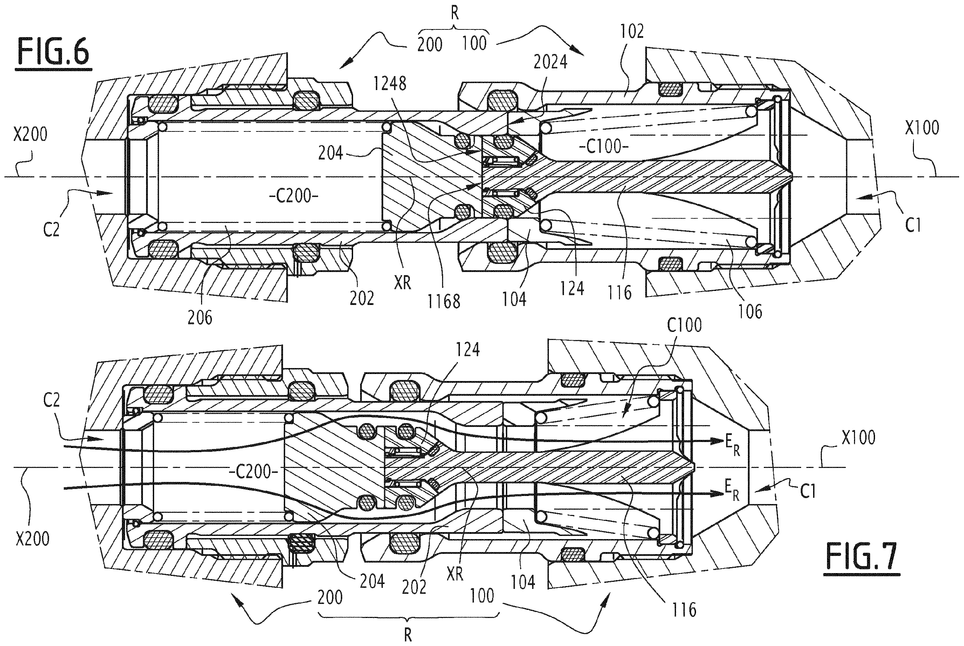

Lorsqu'il convient d'accoupler les éléments 100 et 200, et comme représenté à la figure 6, les axes X100 et X200 sont alignés pour former un axe commun XR qui est l'axe d'emmanchement du raccord, les faces avant 108 et 208 étant alors en regard. On rapproche alors les éléments de raccord 100 et 200 l'un de l'autre le long de l'axe XR, ce qui a pour effet d'amener un appui la partie 2024 de la face avant 208 contre le clapet 104 et les faces avant 1168 et 1248 du poussoir 116 et de la bague de décharge 124 contre le clapet 204. Ceci a pour effet de repousser les clapets 104 et 204, respectivement à l'intérieur des corps 102 et 202, à l'encontre des efforts exercés par les ressorts 106 et 206. On parvient alors dans la configuration de début d'emmanchement représentée à la figure 6, où les canaux internes C100 et C200 sont encore isolés l'un de l'autre.

En poursuivant le mouvement d'emmanchement, on parvient à la configuration de la figure 7 où les clapets 104 et 204 sont dans des deuxièmes positions reculées où ils définissent, respectivement avec les corps 102 et 202, des passages annulaires, au point que les canaux internes C100 et C200 sont en communication, ce que représente les flèches d'écoulement E_{R}, dans le cas où un fluide caloporteur est délivré par le raccord mâle 100 pour recharger la canalisation C1 à partir de la canalisation C2. Dans cette configuration, la bague de décharge 124 et le poussoir 116 restent en appui contre le clapet 204, alors que le corps 202 reste en appui contre le clapet 104.

En pratique, le clapet 204 est pourvu, dans un plan différent de celui de la figure 7, de canaux de passage du fluide permettant l'écoulement dans le sens des flèches E_{R}.

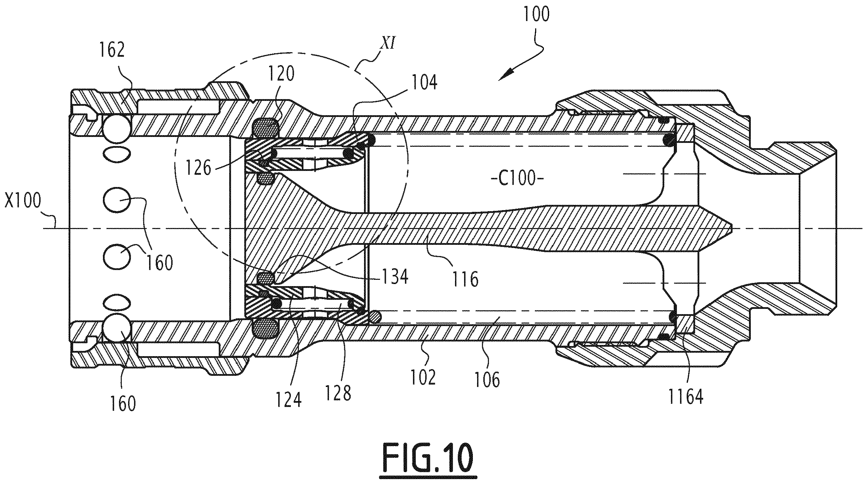

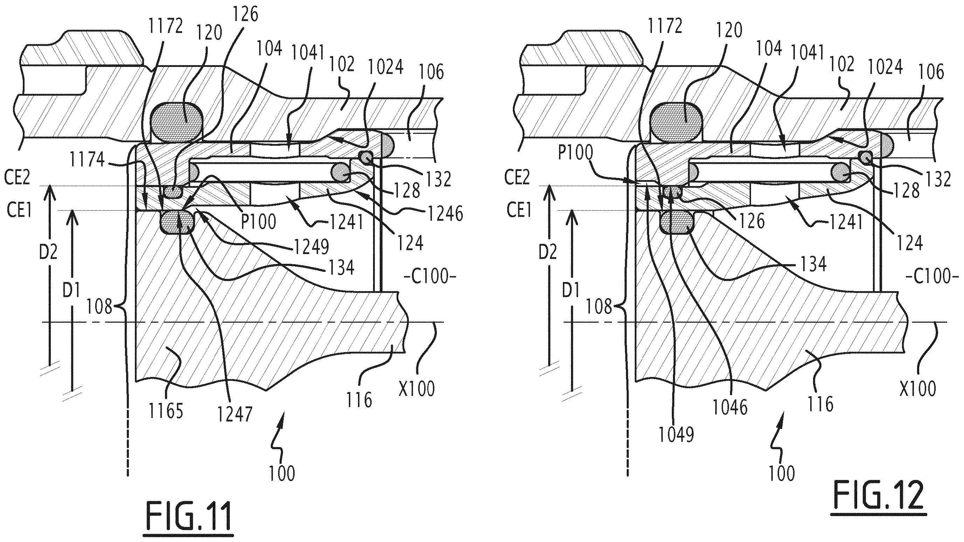

En variante, l'écoulement a lieu de la canalisation C1 vers la canalisation C2, c'est-à-dire dans le sens opposé à celui des flèches E_{R}. Selon un aspect non représenté de l'invention, un système de verrouillage des éléments 100 et 200 du raccord en configuration accouplée peut être prévu, notamment sous la forme d'un système à billes, à baïonnette(s) ou à griffes. Un système de verrouillage à billes est représenté pour le troisième mode de réalisation des figures 10 et 11.

On remarque sur les figures 1, 6 et 7 que, lors de l'accouplement des éléments 100 et 200, c'est-à-dire lors du passage de la configuration de la figure 1 à la configuration de la figure 7, la bague de décharge 124 et le poussoir 116 du sous-ensemble télescopique SE ne se déplacent pas l'un par rapport à l'autre le long de l'axe X100. La bague de décharge 124 reste dans sa première position où elle obture le passage de décharge P100. Il en va de même lors du désaccouplement des éléments 100 et 200 qui est effectué en écartant progressivement des éléments, c'est-à-dire en passant de la configuration de la figure 7 à celle de la figure 6, puis à celle de la figure 1. Ainsi, l'accouplement et le désaccouplement des éléments de raccords a lieu sans ouverture du passage P100, ce qui évite le remplissage des volumes contenus entre le poussoir 116 et le clapet 124.

La position représentée à la figure 4 n'est pas la position d'écartement maximale entre les surfaces 1245 et 1174. Cette position d'écartement maximale résulte de plusieurs facteurs, tels que la longueur du nez 1165, les caractéristiques du ressort 128, les dimensions de la bague 124, la différence des aires des sections formées par les diamètres des joints 126 et 134, ainsi que les dimensions de la bague d'arrêt 130. En pratique, cette position d'écartement maximale n'est que rarement atteinte, car un écartement de quelques millimètres ou quelques dixièmes de millimètre entre les surfaces 1245 et 1174 suffit à décharger quelques gouttes du fluide présent dans le canal interne C100 pour abaisser la pression dans ce canal, au point que la bague de décharge 124 revient vers sa première position sous l'action du ressort 128.

Le tarage de la pression interne de l'élément femelle de raccord 100 pour laquelle la bague de décharge 124 passe de sa première position à sa deuxième position peut être effectué en jouant sur les caractéristiques du ressort 128, sur la géométrie de la bague de décharge 124, notamment sur le rapport des diamètres D1 et D2. A cet égard, la différence entre les diamètres D1 et D2, c'est-à-dire la différence entre les diamètres des joints 126 et 134, permet de créer les surfaces 1246 et 1245A de la bague 124 dont la projection dans un plan perpendiculaire à l'axe X100 a une aire suffisante pour que l'effort de pression entraîne efficacement la bague de décharge 124 vers l'avant, en passant de la première position de la figure 2 à la deuxième position de la figure 4, alors que l'aire de cette surface est sensiblement supérieure à l'aire d'une bille installée sur l'axe d'un élément de raccord, comme cela est prévu dans l'état de la technique.

Le siège d'étanchéité de décharge, formé par la surface 1245, est différent du siège d'étanchéité d'ouverture du canal interne 100 en phase d'accouplement, formé par la surface 1024. Le diamètre intérieur de passage du raccord R peut être relativement faible, notamment inférieur à 25 mm, sans constituer un inconvénient pour réaliser un système de décharge efficace à proximité de la face avant 108 de l'élément de raccord 100.

L'utilisation de la bague de décharge 124, qui présente selon ce mode d'exécution des surfaces annulaires 1246 et 1245A exposées à la pression dans le canal C100, permet d'améliorer sa sensibilité à la pression et sa réactivité en cas de surpression. En d'autre termes, la bague de décharge 124 de l'élément de raccord 100 est sensible à une pression moins élevée qu'une bille de l'état de la technique.

Comme dans la première position de la bague de décharge 124, la zone d'étanchéité entre le poussoir 116 et la bague de décharge 124 est réalisée dans un plan tronconique, à l'interface entre les surfaces 1245 et 1174 et le joint 134, la course axiale, parallèle à l'axe X100, de la bague 124 nécessaire à la décharge est faible, ce qui limite les frottements auxquels sont soumis les joints, notamment le joint 126.

En outre, le déplacement de la bague de décharge 124 sous l'effet d'une augmentation de pression dans le canal interne C100 est directement visible depuis l'extérieur car la surface 1248 fait partie de la face avant 108 de l'élément femelle de raccord 100. En effet, dans la deuxième position de la bague de décharge 124, cette surface 1248 est décalée axialement, le long de l'axe X100 par rapport aux surfaces 1168 et 1048, comme visible à la figure 4.

Comme, lors des phases d'accouplement et de désaccouplement des éléments mâle et femelle du raccord R, les éléments 116 et 124 ne se déplacent pas l'un par rapport à l'autre le long de l'axe X100, le passage de décharge P100 demeure fermé lors de ces phases, ce qui garantit que l'élément de raccord 100 ne fuit que lorsqu'il est en configuration désaccouplée, sous l'effet d'une surpression dans le canal interne C100.

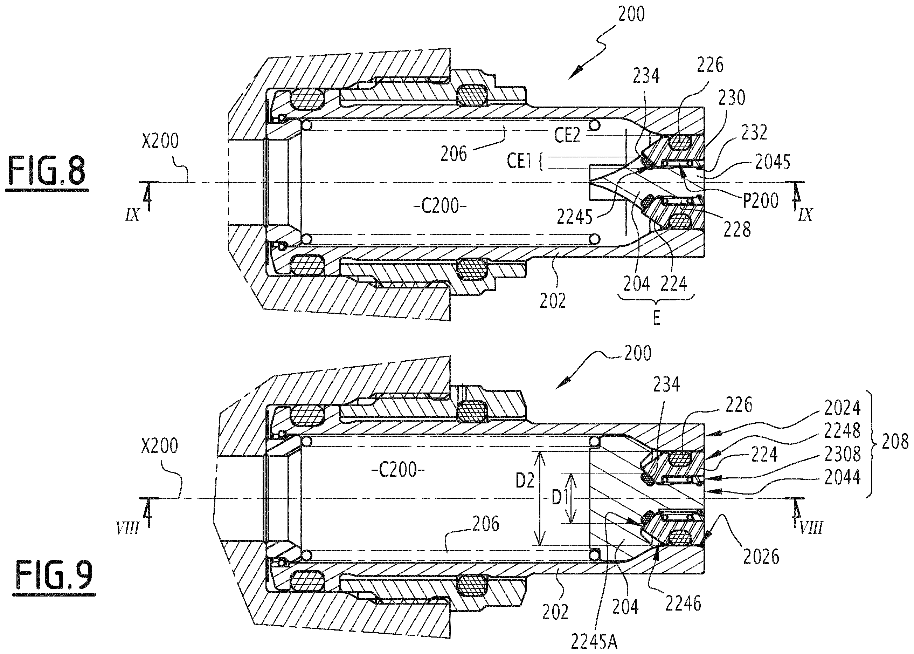

Dans les deuxième à sixième modes de réalisation de l'invention représentés aux figures 8 et suivantes, les éléments analogues à ceux du premier mode de réalisation portent les mêmes références et ne sont pas décrits en détail. Dans ce qui suit, on mentionne principalement ce qui distingue ces modes de réalisation du premier.

Dans le deuxième mode de réalisation représenté aux figures 8 et 9, l'élément mâle de raccord 200 est équipé d'une bague de décharge 224 qui est montée, non pas sur un poussoir fixe par rapport au corps 202, mais autour du clapet 204 qui est mobile par rapport à ce corps, le long de l'axe X200, entre une première position et une deuxième position analogues à celles définies pour le clapet 104 du premier mode de réalisation. Les pièces 204 et 224, qui sont distinctes l'une de l'autre, appartiennent à un équipage E mobile selon l'axe X200 à l'intérieur du corps 202 et qui est soumis à l'action du ressort 206 et à l'action du poussoir d'un élément femelle qui peut être un élément femelle classique, dépourvu de bague de décharge, où l'élément femelle 100 du premier mode de réalisation. Lors des mouvements de l'équipage E, les pièces 204 et 224 conservent leur position relative le long de l'axe X200. En configuration désaccouplée du raccord, l'équipage E est en appui contre un siège formé par le corps 202 et obture le canal interne C200 vers l'avant. En configuration accouplée, un passage de fluide est ménagé entre cet équipage E et le corps 202, avec une disposition analogue à celle montrée à la figure 7 pour le clapet 204 à l'intérieur du corps 202. Les pièces 204 et 224 définissent alors un passage annulaire de mise en communication du canal interne avec un canal interne d'un élément de raccord complémentaire. L'équipage E joue ici le rôle du clapet 204 du premier mode de réalisation. Il est mobile entre une position avancée et une position reculée qui correspondent respectivement aux configurations désaccouplée et accouplée du raccord.

Le passage de décharge est ici défini radialement entre le clapet 204 et la bague de décharge 224 lorsque la bague de décharge est dans sa deuxième position.

Comme dans le premier mode de réalisation, la bague de décharge 224 porte un joint d'étanchéité 226 qui vient en appui contre une pièce périphérique qui est ici formée par le corps 202, alors que, dans le premier mode de réalisation, cette pièce périphérique est formée par le clapet 104. Plus précisément, le joint 226 vient en appui radial contre une surface radiale interne 2026 du corps 202.

Comme dans le premier mode de réalisation, un ressort 228 repousse par défaut la bague de décharge 224 en appui contre un joint 234 porté par le clapet 204, et vers l'arrière de l'élément de raccord 200. Le ressort 228 est en appui sur une bague d'arrêt 230 immobilisée sur un nez avant 2045 du poussoir 204 grâce à un circlip 232. La bague de décharge 224 est montée coulissante sur ce nez avant 2045.

Comme dans le premier mode de réalisation, on note 2024 et 2044 les faces avant respectives du corps 202 et du clapet 204. On note également 2248 et 2308 les faces avant respectives des bagues 224 et 230. La face avant 2024 entoure la face avant 2248, qui entoure la face avant 2308, qui entoure la face avant 2044. Les faces avant 2024, 2248 et 2308 sont annulaires et planes. La face avant 2248 est en forme de disque. En configuration désaccouplée de l'élément mâle de raccord 200 et lorsque la bague de décharge obture le passage de décharge P200, les faces avant 2024, 2248, 2308 et 2044, qui constituent ensemble la face avant 208 de l'élément 200, sont alignés dans un plan perpendiculaire à l'axe X200 comme visible aux figures 8 et 9.

Comme dans le premier mode de réalisation, l'appui de la bague de décharge 224 sur le clapet 204 a lieu, en position fermée, sur deux circonférences d'étanchéité CE1 et CE2 qui sont distinctes, ce qui permet de définir une surface annulaire tronconique 2246 sur laquelle peut s'exercer une partie d'un effort de pression dû à la pression du fluide au sein du canal interne C200 défini par le corps 202. Cet effort de pression s'exerce également en partie sur une portion 2245A d'une surface 2245 définie comme dans le premier mode de réalisation. La première circonférence d'étanchéité CE1 est définie autour du joint 234 et on note D1 son diamètre maximum. La deuxième circonférence d'étanchéité CE2 est définie à l'interface entre le joint 226 et la surface 2026. On note D2 son diamètre. Le diamètre D2 est strictement supérieur au diamètre D1.

Les troisième à sixième modes de réalisation concernent le cas où l'invention est mise en oeuvre au sein d'un élément femelle de raccord, comparable à l'élément 100 du premier mode de réalisation. Elle pourrait également être mise en oeuvre au sein d'un élément mâle de raccord comparable à l'élément 200 du deuxième mode de réalisation.

Dans ces modes de réalisation, le clapet 104 et la bague de décharge 124 prennent des première et deuxième positions comme dans le premier mode de réalisation.

Dans le troisième mode de réalisation de l'invention, la zone de contact entre la bague de décharge 124 et le poussoir 116 n'est pas tronconique, comme dans les deux premiers modes de réalisation, mais cylindrique à base circulaire. Le joint 134 est engagé dans une gorge 1172 ménagée dans une surface cylindrique externe à base circulaire 1174 du poussoir 116. D'un autre côté, une surface radiale interne 1247 de la bague de décharge 124, qui est cylindrique à base circulaire, est configurée pour être en contact avec le joint 134 dans la première position de la bague de décharge 124, ce qui définit une première circonférence d'étanchéité CE1. La surface 1247 est bordée, du côté de la bague de décharge tournée à l'opposé de la face avant 108, par une zone 1249 accessible à partir du canal interne C100 en première position de la bague de décharge. Cette zone 1249 a un diamètre augmenté par rapport à celui de la surface 1247. Lorsque la bague de décharge est repoussée vers l'avant, sous l'effet d'une pression s'exerçant sur une surface arrière 1246 de cette bague de décharge, la zone 1249 parvient en regard du joint 134, le long de l'axe X100. Ceci a pour effet d'ouvrir un passage de décharge P100 à travers lequel peut s'écouler le fluide contenu dans le canal interne C100 de l'élément de raccord. A la figure 11, l'emplacement du passage de décharge P100 est représenté par une flèche débouchant sur la face avant 108 de l'élément 100, même si, dans la position de la bague de décharge représentée sur cette figure, ce passage est fermé. On remarque que la circonférence d'étanchéité CE2 entre le joint 126 porté par la bague de décharge 124 et le clapet 104 a un diamètre D2 strictement supérieur au diamètre D1.

Le quatrième mode de réalisation de l'invention représenté à la figure 12 procède d'une approche voisine de celle du troisième mode de réalisation. Dans ce mode de réalisation, le passage de décharge P100, représenté dans les mêmes conditions qu'à la figure 11, est défini entre la bague de décharge 124 et le clapet 104. La surface radiale interne 1046 du clapet 104, qui est en appui radial contre le joint 126 dans la première position de la bague de décharge 124 représentée à la figure 12, se prolonge, du côté de la face avant 108, par une zone 1049 de diamètre augmenté par rapport à celui de la surface 1046. Lorsque la bague de décharge 124 est repoussée vers la gauche de la figure 12, le joint 126 se retrouve aligné axialement avec la zone 1049 selon un plan normal à l'axe X100 auquel le joint 126 appartient, de sorte qu'il n'est plus au contact du clapet 104. Ceci a pour effet d'ouvrir le passage de décharge P100, à travers lequel peut s'écouler le fluide contenu dans le canal interne C100 de l'élément de raccord.

Dans le mode de réalisation de la figure 12, deux circonférences d'étanchéité CE1 et CE2 sont définies, avec la même approche que dans le mode de réalisation des figures 10 et 11. La différence essentielle entre les troisième et quatrième modes de réalisation est que, dans le troisième mode de réalisation, le passage de décharge est ménagé au niveau radial de la première circonférence CE1 alors que, dans le mode de réalisation de la figure 12, ce passage de décharge est ménagé au niveau de la deuxième circonférence CE2.

Dans les troisième et quatrième modes de réalisation mentionné ci-dessus, le clapet 104 et la bague de décharge 124 sont chacun pourvus de plusieurs orifices radiaux traversants 1041, respectivement 1241, qui permettent de répartir la pression du fluide à l'intérieur du corps 102, notamment lors des mouvements du clapet 104 vis-à-vis du siège 1024, sans risque d'emprisonner du fluide entre le clapet 104 et le corps 102.

Dans les troisième et quatrième modes de réalisation, comme visible uniquement à la figure 10, l'élément de raccord femelle 100 est pourvu d'un système de verrouillage à billes 160 destiné à coopérer avec une gorge périphérique d'un élément de raccord mâle complémentaire. La position radiale de ces billes par rapport à l'axe X100 est commandée par une bague 162.

Egalement, dans ces deux modes de réalisation, un circlips 132 est utilisé pour retenir la bague de décharge 124 sur le clapet 104, en formant une butée résistant à l'effort exercé par le ressort 128.

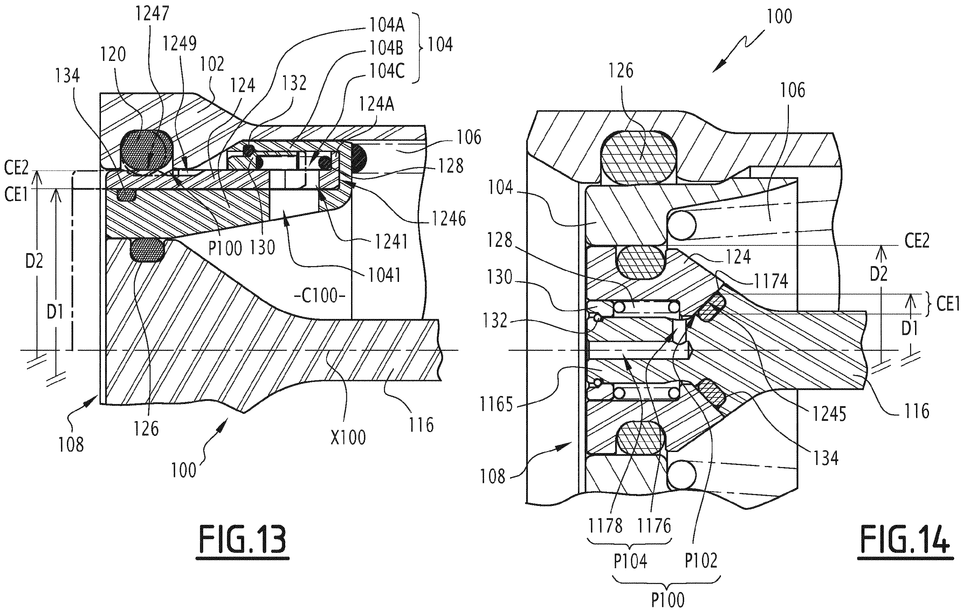

Dans le cinquième mode de réalisation de l'invention représenté à la figure 13, le clapet 104 est monté autour du poussoir 116 en face avant du raccord, en étant soumis à l'action du ressort 106. Le clapet 104 appartient aux moyens d'obturation du canal interne C100 de l'élément de raccord 100. Dans ce mode de réalisation, l'organe central comprend le poussoir 116 et le clapet 104. La bague d'étanchéité 124 est ici intercalée radialement entre une partie principale 104A du clapet 104 et le corps 102 de l'élément de raccord 100. Une partie auxiliaire 104B du clapet 104 entoure radialement un talon arrière 124A de la bague de décharge 124.

La bague de décharge 124 est soumise à l'action d'un ressort 128 de rappel élastique qui la repousse vers l'intérieur du corps 102, par rapport au clapet 104, et vers sa première position. Pour ce faire, le ressort 128 est reçu dans un logement 104C, défini radialement entre les parties 104A et 104B du clapet 104, et en appui sur une bague d'arrêt 130, elle-même immobilisée dans le logement 104C par rapport au clapet 104 au moyen d'un circlip 132.

Le clapet 104 et la bague d'étanchéité 124 sont pourvus de plusieurs orifices 1041, respectivement 1241, qui aident à ce que la pression régnant dans le conduit C100 de l'élément de raccord s'applique également sur la bague de décharge 124, dans le logement 104C et jusque sur une surface 1246 du talon 124A tournée à l'opposé de la face avant 108.

En pratique, la pression régnant dans le conduit C100 s'applique sur toutes les surfaces de la bague de décharge 124 situées à droite des joints 120 et 134 à la figure 13. Les efforts de pression s'annulent deux à deux, sauf au niveau d'un anneau correspondant à une projection parallèle à l'axe X100 de l'aire entre les joints 120 et 134 perpendiculaire à X100 sur la surface 1246. La résultante, sur la bague de décharge 124, de la pression régnant dans le conduit C100 est donc une force dirigée vers la gauche à la figure 13, c'est-à-dire vers la face avant 108.

Lorsque la pression dans le conduit C100 augmente, l'effort exercé sur la surface 1246 a pour effet de faire passer la bague de décharge 124 de sa première position représentée en traits pleins à la figure 13 à sa deuxième position représentée en traits d'axe.

On note 1247 la surface périphérique externe de la bague de décharge 124 contre laquelle le joint 120 est en appui radial. Cette surface 1247 est bordée, à l'opposé de la face avant 108, par une gorge périphérique 1249, qui est décalée axialement, le long de l'axe X100, par rapport au joint 120 lorsque la bague de décharge 124 est dans sa première position. Cette gorge 1249 est alignée axialement avec ce joint lorsque la bague de décharge est dans sa deuxième position. Ainsi, dans cette deuxième position, un passage de décharge P100 est créé entre la bague de décharge 124 et le corps 102 de l'élément de raccord 100.

Comme aux figures 11 et 12, l'emplacement du passage de décharge P100 est représenté par une flèche à la figure 13, même si ce passage est fermé dans la configuration représentée.

Dans ce mode de réalisation, la première circonférence d'étanchéité CE1 est définie entre le clapet 104 et la bague d'étanchéité 124, avec un diamètre D1 et la deuxième circonférence d'étanchéité CE2 est définie entre la bague d'étanchéité 124 et le corps 102, avec un diamètre D2, strictement supérieur au diamètre D1.

Dans le sixième mode de réalisation de l'invention représenté à la figure 14, le passage de décharge P100 comprend une première portion P102 définie entre les surfaces 1245 et 1174, respectivement ménagées sur la bague de décharge 124 et sur le poussoir 116 comme dans le premier mode de réalisation, et une deuxième portion P104 formée par des canaux 1176 et 1178 ménagés au sein du nez 1165 du poussoir 116. Dans les premier, deuxième et sixième modes de réalisation de l'invention, lorsqu'elle est dans sa première position, la bague de décharge 124 ou 224 prend appui contre un siège formé par la surface 1174 ou par une surface correspondante du clapet 204, selon une direction inclinée par rapport à l'axe X100 ou X200, donc en partie selon une direction parallèle à cet axe. En variante, les surfaces 1174 et équivalentes peuvent être perpendiculaires à ces axes, auquel cas l'appui de la bague décharge contre son siège à lieu parallèlement à l'axe X100 ou X200. Dans tous les cas, pour ces modes de réalisation et dans cette première position, la bague de décharge obture le passage de décharge P100 formé au moins partiellement entre l'organe central et la bague de décharge au niveau de la première circonférence CE1. Dans les premier, deuxième et sixième modes de réalisation, la première circonférence d'étanchéité CE1 présente une épaisseur radiale non nulle. En variante, cette épaisseur radiale peut être nulle ou quasi nulle, comme pour la deuxième circonférence d'étanchéité CE2.

Une circonférence d'étanchéité est définie de manière générale comme la courbe selon laquelle deux pièces mécaniques peuvent maintenir un contact étanche, autrement dit un appui étanche à l'aide ou non d'un moyen intermédiaire d'étanchéité, tel qu'un joint, et ceci de façon permanente ou amovible. Ces circonférences d'étanchéité ont pour fonction de limiter le passage de fluide entre les pièces mécaniques. Elles sont définies de préférence selon les surfaces de contact internes ou externes des joints annulaires. Lorsqu'on considère une circonférence d'étanchéité CE1 ou CE2, et lorsque celle-ci a une épaisseur radiale non nulle, un diamètre de cette circonférence d'étanchéité est un diamètre dont la valeur est comprise entre le diamètre maximum et le diamètre minimum de cette circonférence d'étanchéité. Dans l'exemple des premier, deuxième et sixième modes de réalisation, tous les diamètres de la circonférence d'étanchéité CE1 sont strictement inférieurs au diamètre D2, puisque le diamètre maximum D1 est inférieur au diamètre D2.

En variante, l'invention prévoit que l'une ou l'autre des circonférences CE1 et CE2 présente une épaisseur radiale non nulle.

Dans les premier, deuxième, troisième et sixième modes de réalisation le passage de décharge P100 ou P200 n'est plus obturé dans la seconde position de la bague de décharge au niveau de la première circonférence CE1 qui est plus petite que la seconde circonférence CE2. Dans les quatrième et cinquième modes de réalisation le passage de décharge P100 est réalisé au niveau de la seconde circonférence CE2, qui est plus grande que la première circonférence CE1.

Dans tous les modes de réalisation, les surfaces formant les faces avant 108 et 208 sont, à l'exception des surfaces tronconiques 1028 et 1028', perpendiculaires à l'axe longitudinal X100 ou X200 de l'élément de raccord 100 ou 200 auquel elles appartiennent. En configuration désaccouplée du raccord et sauf en cas de fuite à travers le passage de décharge, les faces avant sont planes, sauf en ce qui concerne ces surfaces 1028 et 1028'. Ainsi, les éléments d'obturation et l'organe central ne présentent pas de forme saillante et forment une face du raccord perpendiculaire à son axe longitudinal qui peut être aisément nettoyée en configuration désaccouplée du raccord.

L'invention n'est pas limitée aux modes de réalisation mentionnés ci-dessus et plusieurs variantes peuvent être envisagées.

En particulier, le mode de connexion entre les éléments de raccord 100 et 200 et les canalisations C1 et C2 peut être différent de celui représenté. Par exemple, les portions arrières des éléments raccords 100 et 200 peuvent comprendre des embouts tubulaires de type « queue de sapin » sur lesquels peuvent être rapportés des tuyaux constitutifs des canalisations C1 et C2.

L'emploi des expressions « autour » et « à l'intérieur de » indique la position relative d'une première pièce par rapport à une deuxième pièce, ces pièces n'étant pas nécessairement directement en contact l'une sur l'autre, mais peuvent délimiter entre elles un espace dans lequel une pièce mécanique peut s'intercaler radialement.

Les joints de clapeterie, notamment les joints 120, 126 et 220 peuvent être montés indifféremment sur un élément d'obturation ou sur l'élément complémentaire contre lequel ce joint est en contact dans les modes de réalisation représentés. En outre, le joint 134 ou 234 peut être monté sur la bague de décharge 124 ou 134, auquel cas il vient en appui contre l'organe central 116 ou 204 lorsque la bague de décharge est dans sa première position.

Selon les modes de réalisation, le joint 134 ou 234 peut être un joint autre que torique, notamment un joint à section non circulaire qui est collé sur le clapet 204 ou sur le moyen d'obturation opposé au clapet par rapport au passage P100, au lieu d'être inséré dans une gorge.

Les rainures 1169 qui constituent une partie axiale du passage de décharge P100 peuvent être prévues dans un nombre différent de trois ou avoir un profil différent de celui visible à la figure 5.

La forme de la bague de décharge 124 peut être différente de celle représentée aux figures, pour autant qu'elle permet de conserver deux circonférences de contact étanche CE1 et CE2 avec des diamètres distincts, D1 et D2.

Un raccord R peut comprendre un seul élément équipé d'une bague de décharge 124 ou 224 et conforme à l'invention ou bien ses deux éléments mâle et femelle sont conformes à l'invention.

L'invention s'applique aux raccords pour fluides liquides ou gazeux.

Les caractéristiques des modes de réalisation et variantes décrits ci-dessus peuvent être combinées pour générer de nouveaux modes de réalisation de l'invention.

## Revendications

1. Elément (100; 200) de raccord rapide (R) pour la jonction amovible de canalisations (C1, C2) de fluide sous pression, cet élément de raccord comprenant
- un corps tubulaire (102 ; 202), définissant un canal interne (C100 ; C200) de passage de fluide sous pression et un axe longitudinal (X100 ; X200) de l'élément de raccord,
- des moyens (104, 116, 124 ; 204, 224) d'obturation du canal interne du côté d'une face avant (108 ; 208) de l'élément de raccord,
- un organe (124 ; 224) de décharge du canal interne (C100 ; C200), mobile entre une première position dans laquelle il obture un passage de décharge (P100 ; P200) reliant le canal interne à l'extérieur du corps, et une deuxième position avancée par rapport à la première position, dans laquelle il n'obture pas le passage de décharge,
**caractérisé en ce que**
- l'organe de décharge est une bague de décharge (124 ; 224) qui fait partie des moyens (104, 116, 124 ; 204, 224) d'obturation du canal interne (C100 ; C200) et qui est montée autour d'un organe central (116; 204; 104) faisant également partie des moyens d'obturation du canal interne, et à l'intérieur d'une pièce périphérique (104 ; 202 ; 102)
- une première surface (1248 ; 2248) de la bague de décharge fait partie de la face avant (108 ; 208),
- la bague de décharge est mobile, par rapport à l'organe central et parallèlement à l'axe longitudinal (X100 ; X200), entre ses première et deuxième positions
- la bague de décharge (124 ; 224) définit, au moins en partie, le passage de décharge (P100; P200), avec l'organe central (116; 204) ou avec la pièce périphérique (104 ; 102) et
- dans sa première position, la bague de décharge (124; 224) est en appui étanche contre l'organe central (116 ; 204 ; 104), sur une première circonférence d'étanchéité (CE1), et en appui étanche contre la pièce périphérique (104 ; 202 ; 102), sur une deuxième circonférence d'étanchéité (CE2),
- un diamètre (D2) de la deuxième circonférence d'étanchéité (CE2) est strictement supérieur à un diamètre (D1) de la première circonférence d'étanchéité (CE1), et
- l'élément de raccord (100; 200) comprend un organe (128; 228) de rappel élastique de la bague de décharge (124 ; 224) vers sa première position, cet organe élastique repoussant la bague de décharge vers l'intérieur du corps tubulaire (102 ; 202) et/ou vers l'arrière de l'élément de raccord (100 ; 200).

2. Elément de raccord selon la revendication 1, **caractérisé en ce que** :
- les moyens (104, 116, 124; 204, 224) d'obturation du canal interne (C100 ; C200) du côté de la face avant (108 ; 208) comprennent un clapet (104 ; 204) mobile, le long de l'axe longitudinal (X100 ; X200), entre une première position de fermeture, où il obture le canal interne, et une deuxième position reculée par rapport à sa première position, où il définit un passage annulaire de mise en communication du canal interne avec un canal interne d'un élément de raccord complémentaire,
- la bague de décharge (124 ; 224) est distincte du clapet et mobile, le long de l'axe longitudinal (X100 ; X200), de sa première position vers sa deuxième position, sous l'effet de la pression de fluide au sein du canal interne (C100 ; C200).

3. Elément de raccord selon l'une des revendications 1 ou 2, **caractérisé en ce que**, dans sa première position, la bague de décharge (124 ; 224) est en appui, selon une direction parallèle à l'axe longitudinal (X100, X200), contre un siège d'étanchéité (1174) formé par l'organe central (116 ; 204) et obture le passage (P100 ; P200) de décharge que la bague de décharge définit avec l'organe central

4. Elément de raccord selon l'une des revendications précédentes, **caractérisé en ce que** les moyens d'obturation (104, 116, 124) comprennent, en outre, un clapet (104) qui est positionné, radialement à l'axe longitudinal (X100), entre l'organe central (116) et le corps (102), le clapet formant la pièce périphérique et entourant la bague de décharge (124) au niveau de la face avant (108).

5. Elément de raccord selon l'une des revendications 1 ou 2, **caractérisé en ce que** les moyens d'obturation (104, 116, 124) comprennent, en outre, un clapet (104) qui est positionné, radialement à l'axe longitudinal (X100), entre l'organe central (116) et le corps (102) et qui est positionné, au niveau de la face avant (108), à l'intérieur de la bague de décharge (124).

6. Elément de raccord selon l'une des revendications 4 ou 5, **caractérisé en ce que**, dans la deuxième position de la bague de décharge (124 ; 224), le passage de décharge (P100 ; P200) s'étend entre le clapet (104 ; 204) et la bague de décharge.

7. Elément de raccord selon l'une des revendications 1 ou 2, **caractérisé en ce que** le corps tubulaire (102) forme la pièce périphérique et définit avec la bague de décharge (124) le passage de décharge (P100) que la bague de décharge obture lorsqu'elle est dans sa première position et en appui étanche avec le corps tubulaire.

8. Elément de raccord selon l'une des revendications précédentes, **caractérisé en ce que** l'organe central (116) est solidaire du corps (102) et comprend une surface (1168) qui constitue une partie de la face avant (108).

9. Elément de raccord selon l'une des revendications 1 à 7, **caractérisé en ce que** l'organe central (204) et la bague de décharge (224) appartiennent à un équipage (E) mobile, parallèlement à l'axe longitudinal (X200) et par rapport au corps (202), entre une position avancée, où l'équipage mobile est en contact étanche avec le corps (202) et obture le canal interne (C200), et une position reculée, où un passage de fluide est ménagé entre l'équipage mobile et le corps.

10. Elément de raccord selon l'une des revendications précédentes, **caractérisé en ce que**, dans sa première position, la bague de décharge (124 ; 224) est en appui, sur la première (CE1) circonférence d'étanchéité, contre une surface (1174) de l'organe central (116 ; 204) qui est tronconique et convergente en direction de la face avant (108, 208).

11. Elément de raccord selon la revendication 10, **caractérisé en ce que** la surface tronconique (1174) a un angle au sommet (α) compris entre 60 et 120°.

12. Elément de raccord selon l'une des revendications précédentes, **caractérisé en ce que**, en configuration désaccouplée de l'élément de raccord (100, 200), le passage de décharge (P100 ; P200) débouche sur la face avant (108 ; 208).

13. Elément de raccord selon l'une des revendications précédentes, **caractérisé en ce que**, en configuration désaccouplée de l'élément de raccord (100 ; 200) et lorsque la bague de décharge (124; 224) est dans sa première position, des faces avant respectives (1048, 1168, 1248 ; 2048, 2248) des moyens d'obturation (104, 116, 124 ; 204, 224) sont alignées dans un plan perpendiculaire à l'axe longitudinal (X100, X200).

14. Raccord rapide (R) pour la jonction amovible de canalisations (C1, C2) de fluide sous pression, ce raccord comprenant un élément de raccord femelle (100) et un élément de raccord mâle (200) complémentaire de l'élément de raccord femelle, **caractérisé en ce que** l'un au moins des éléments de raccord (100, 200) est selon l'une des revendications précédentes.

15. Raccord rapide selon la revendication 14, **caractérisé en ce que**, en configuration accouplée du raccord (R), au moins un organe mécanique (104, 204, 224) d'obturation du canal interne (C100 ; C200) de l'élément de raccord (100 ; 200) est dans une position reculée où il définit avec le corps (102 ; 202) de cet élément de raccord un passage pour l'écoulement (E_{R}) du fluide sous pression.

## Patentansprüche

1. Element (100; 200) einer Schnellkupplung (R) für die lösbare Verbindung von unter Druck stehenden Fluidleitungen (C1, C2), wobei dieses Kupplungselement umfasst
- einen Rohrkörper (102; 202), der einen Innenkanal (C100; C200) für den Durchgang des unter Druck stehenden Fluids und eine Längsachse (X100; X200) des Kupplungselements definiert,
- Mittel (104, 116, 124; 204, 224) zum Verschließen des Innenkanals von der Seite einer vorderen Stirnfläche (108; 208) des Kupplungselements,
- ein Element (124; 224) zum Entlasten des Innenkanals (C100; C200), das zwischen einer ersten Stellung, in der es einen Auslassdurchgang (P100; P200), der den Innenkanal mit dem Außenraum des Körpers verbindet, verschließt, und einer zweiten in Bezug auf die erste Stellung vorgerückte Stellung, in der es den Auslassdurchgang nicht verschließt, beweglich ist,
**dadurch gekennzeichnet, dass**
- das Entlastungselement ein Entlastungsring (124; 224) ist, der Teil der Mittel (104, 116, 124; 204, 224) zum Verschließen des Innenkanals (C100; C200) ist, und der um ein mittleres Element (116; 204; 104) montiert ist, das ebenfalls Teil der Mittel zum Verschließen des Innenkanals ist und im Inneren eines Umfangsteils (104; 202; 102) montiert ist
- eine erste Fläche (1248; 2248) des Entlastungsrings Teil der vorderen Stirnfläche (108; 208) ist,
- der Entlastungsring in Bezug auf das mittlere Element und parallel zur Längsachse (X100; X200) zwischen seiner ersten und zweiten Stellung beweglich ist
- der Entlastungsring (124; 224) zumindest teilweise mit dem mittleren Element (116; 204) oder mit dem Umfangsteil (104; 102) den Auslassdurchgang (P100; P200) begrenzt und
- der Entlastungsring (124; 224) in seiner ersten Stellung in abdichtender Anlage gegen das mittlere Element (116; 204; 104) über einen ersten Abdichtungsumfang (CE1) ist und in abdichtender Anlage gegen das Umfangsteil (104; 202; 102) über einen zweiten Abdichtungsumfang (CE2) ist,
- ein Durchmesser (D2) des zweiten Abdichtungsumfangs (CE2) streng größer als ein Durchmesser (D1) des ersten Abdichtungsumfangs (CE1) ist, und
- das Kupplungselement (100); 200) ein federndes Element (128; 228) zum Rückstellen des Entlastungsrings (124; 224) in seine erste Stellung umfasst, wobei dieses federnde Element den Entlastungsring in das Innere des Rohrkörpers (102; 202) und/oder in Bezug auf das Kupplungselement (100; 200) nach hinten zurückschiebt.

2. Kupplungselement nach Anspruch 1, **dadurch gekennzeichnet, dass**:
- die Mittel (104, 116, 124; 204, 224) zum Verschließen des Innenkanals (C100; C200) von der vorderen Stirnfläche (108; 208) her ein Ventil (104; 204) umfassen, das entlang der Längsache (X100; X200) zwischen einer ersten Schließstellung, in der es den Innenkanal verschließt, und einer zweiten in Bezug auf seine erste Stellung zurückgezogenen Stellung, in der es einen ringförmigen Durchgang für ein Verbinden des Innenkanals mit einem Innenkanal eines komplementären Kupplungselements begrenzt, beweglich ist,
- der Entlastungsring (124; 224) verschieden zu dem Ventil ist und entlang der Längsachse (X100; X200) unter der Wirkung des Drucks des Fluids in dem Innenkanal (C100; C200) von seiner ersten Stellung in seine zweite Stellung beweglich ist.

3. Kupplungselement nach einem der Ansprüche 1 oder 2, **dadurch gekennzeichnet, dass** der Entlastungsring (124; 224) in seiner ersten Stellung gemäß einer Richtung parallel zur Längsachse (X100; X200) an einem Abdichtungssitz (1174) anliegt, der von dem mittleren Element (116; 204) gebildet wird und den Auslassdurchgang (P100; P200), den der Entlastungsring mit dem mittleren Element begrenzt, verschließt.

4. Kupplungselement nach einem der vorhergehenden Ansprüche, **dadurch gekennzeichnet, dass** die Mittel zum Verschließen (104, 116, 124) außerdem ein Ventil (104) umfassen, das radial zur Längsachse (X100) zwischen dem mittleren Element (116) und dem Körper (102) positioniert ist, wobei das Ventil das Umfangsteil bildet und den Entlastungsring (124) im Bereich der vorderen Stirnfläche (108) umgreift.

5. Kupplungselement nach einem der Ansprüche 1 oder 2, **dadurch gekennzeichnet, dass** die Mittel zum Verschließen (104, 116, 124) außerdem ein Ventil (104) umfassen, das radial zur Längsachse (X100) zwischen dem mittleren Element (116) und dem Körper (102) positioniert ist und das im Bereich der vorderen Stirnfläche (108) im Inneren des Entlastungsrings (124) positioniert ist.

6. Kupplungselement nach einem der Ansprüche 4 oder 5, **dadurch gekennzeichnet, dass** in der zweiten Stellung des Entlastungsrings (124; 224) der Auslassdurchgang (P100; P200) sich zwischen dem Ventil (104; 204) und dem Entlastungsring erstreckt.

7. Kupplungselement nach einem der Ansprüche 1 oder 2, **dadurch gekennzeichnet, dass** der Rohrkörper (102) das Umfangsteil bildet und mit dem Entlastungsring (124) den Auslassdurchgang (P100), den der Entlastungsring verschließt, wenn er in seiner ersten Stellung und in abdichtender Anlage mit dem Rohrkörper ist, begrenzt.

8. Kupplungselement nach einem der vorhergehenden Ansprüche, **dadurch gekennzeichnet, dass** das mittlere Element (116) mit dem Körper (102) verbunden ist und eine Fläche (1168) umfasst, die einen Teil der vorderen Stirnfläche (108) bildet.

9. Kupplungselement nach einem der Ansprüche 1 bis 7, **dadurch gekennzeichnet, dass** das mittlere Element (204) und der Entlastungsring (224) zu einer Anordnung (E) gehören, die parallel zur Längsachse (X200) und in Bezug auf den Körper (202) zwischen einer vorgerückten Stellung, in der die bewegliche Anordnung in abdichtendem Kontakt mit dem Körper ist und den Innenkanal (C200) verschließt, und einer zurückgezogenen Stellung, in der der Durchgang des Fluids zwischen der beweglichen Anordnung und dem Körper ausgebildet ist, beweglich ist.

10. Kupplungselement nach einem der vorhergehenden Ansprüche, **dadurch gekennzeichnet, dass** der Entlastungsring (124; 224) in seiner ersten Stellung in Anlage über den ersten Abdichtungsumfang (CE1) an einer Fläche (1174) des mittleren Element (116; 204), die kegelstumpfförmig ist und in Richtung der vorderen Stirnfläche (108; 208) konvergiert.

11. Kupplungselement nach Anspruch 10, **dadurch gekennzeichnet, dass** die kegelstumpfförmige Fläche (1174) einen Scheitelwinkel (α) zwischen 60 und 120° aufweist.

12. Kupplungselement nach einem der vorhergehenden Ansprüche, **dadurch gekennzeichnet, dass** in der entkuppelten Stellung des Kupplungselement (100, 200) der Auslassdurchgang (P100; P200) an der vorderen Stirnfläche (108; 208) mündet.

13. Kupplungselement nach einem der vorhergehenden Ansprüche, **dadurch gekennzeichnet, dass** in der entkuppelten Stellung des Kupplungselements (100; 200) und wenn der Entlastungsring (124; 224) in seiner ersten Stellung ist, jeweilige vordere Stirnflächen (1048, 1168, 1248; 2048, 2248) der Mittel zum Verschließen (104, 116, 124; 204, 224) in einer Ebene senkrecht zur Längsachse (X100, X200) ausgerichtet sind.

14. Schnellkupplung (R) für die lösbare Verbindung von unter Druck stehenden Fluidleitungen (C1, C2), wobei diese Kupplung ein Kupplungsaufnahmeelement (100) und ein Kupplungseinsteckelement (200), komplementär zum Kupplungsaufnahmeelement, umfasst, **dadurch gekennzeichnet, dass** mindestens eines der Kupplungselemente (100, 200) nach einem der vorhergehenden Ansprüche ausgebildet ist.

15. Schnellkupplung nach Anspruch 14, **dadurch gekennzeichnet, dass** in der gekuppelten Stellung der Kupplung (R) mindestens ein mechanisches Element (104, 204, 224) zum Verschließen des Innenkanals (C100; C200) des Kupplungselements (100; 200) in einer zurückgezogenen Stellung ist, in der es mit dem Körper (102; 202) dieses Kupplungselements einen Durchgang für die Strömung (E_{R}) des unter Druck stehenden Fluids begrenzt.

## Claims

1. A quick coupling (R) element (100; 200) for removably joining pressurized fluid pipes (C1, C2), this coupling element comprising
- a tubular body (102; 202) defining an inner channel (C100; C200) for the passage of a pressurized fluid and a longitudinal axis (X100; X200) of the coupling element,
- means (104, 116, 124; 204, 224) for closing off the inner channel on the side of a front face (108; 208) of the coupling element,
- a relief member (124; 224) of the inner channel (C100; C200), movable between a first position, in which it closes off a relief passage (P100; P200) connecting the inner channel to the outside of the body, and a second forward position relative to the first position, in which it does not close off the relief passage,
**characterized in that**
- the relief member is a relief ring (124; 224) that is part of the means (104, 116, 124; 204, 224) for closing off the inner channel (C100; C200) and that is mounted around a central member (116; 204; 104), which is also part of the closing off means, and inside a peripheral part (104; 202; 102).
- a first surface (1248; 2248) of the relief ring is part of the front face (108; 208),
- the relief ring is movable, relative to the central member and parallel to the longitudinal axis (X100; X200), between its first and second positions,
- the relief ring (124; 224) defines, at least in part, the relief passage (P100; P200) with the central member (116; 204) or with the peripheral part (104; 102), and
- in its first position, the relief ring (124; 224) bears sealably against the central member (116; 204; 104), over a first sealing circumference (CE1), and bears sealably against the peripheral part (104; 202; 102), over a second sealing circumference (CE2),
- a diameter (D2) of the second sealing circumference (CE2) is strictly larger than a diameter (D1) of the first sealing circumference (CE1), and
- the coupling element (100; 200) comprises an elastic return member (128; 228) for returning the relief ring (124; 224) toward its first position, this elastic member pushing the relief ring back toward the inside of the tubular body (102; 202) and/or toward the rear of the coupling element (100; 200).

2. The coupling element according to claim 1, **characterized in that**:
- the means (104, 116, 124; 204, 224) for closing off the inner channel (C100; C200) on the side of the front face (108; 208) comprise a valve (104; 204) moving, along the longitudinal axis (X100; X200), between a first closing position, where it closes off the inner channel, and a second withdrawn position relative to its first position, where it defines an annular passage placing the inner channel in communication with an inner channel of a complementary coupling element,
- the relief ring (124; 224) is separate from the valve and movable, along the longitudinal axis (X100; X200), from its first position toward its second position, under the effect of the fluid pressure within the inner channel (C100; C200).

3. The coupling element according to one of claims 1 or 2, **characterized in that**, in its first position, the relief ring (124; 224) bears, along a direction parallel to the longitudinal axis (X100, X200), against a sealing seat (1174) formed by the central member (116; 204) and closes off the relief passage (P100; P200) that it defines with the central member.

4. The coupling element according to one of the preceding claims, **characterized in that** the closing off means (104, 116, 124) further comprise a valve (104) that is positioned, radially to the longitudinal axis (X100), between the central member (116) and the body (102), the valve forming the peripheral part and surrounding the relief ring (124) at the front face (108).

5. The coupling element according to one of claims 1 or 2, **characterized in that** the closing off means (104, 116, 124) further comprise a valve (104) that is positioned, radially to the longitudinal axis (X100), between the central member (116) and the body (102) and that is positioned, at the front face (108), radially to the inside of the relief ring (124).

6. The coupling element according to one of claims 4 or 5, **characterized in that**, in the second position of the relief ring (124; 224), the relief passage (P100; P200) extends between the valve (104; 204) and the relief ring.

7. The coupling element according to one of claims 1 or 2, **characterized in that** the tubular body (102) forms the peripheral part and defines, with the relief ring (124), the relief passage (P100) that the relief ring closes off when it is in its first position and in sealed bearing with the tubular body.

8. The coupling element according to one of the preceding claims, **characterized in that** the central member (116) is secured to the body (102) and comprises a surface (1168) that constitutes part of the front face (108).

9. The coupling element according to one of claims 1 to 7, **characterized in that** the central member (204) and the relief ring (224) belong to an assembly (E) movable, parallel to the longitudinal axis (X200) and relative to the body (202), between a forward position, where the moving assembly is in sealed contact with body (202) and closes off the inner channel (C200), and a withdrawn position, where a fluid passage is arranged between the moving assembly and the body.

10. The coupling element according to one of the preceding claims, **characterized in that**, in its first position, the relief ring (124; 224) bears, on the first sealing circumference (CE1), against a surface (1174) of the central member (116; 204) that is frustoconical and convergent toward the front face (108, 208).

11. The coupling element according to claim 10, **characterized in that** the frustoconical surface (1174) has an apical angle (α) comprised between 60 and 120°.

12. The coupling element according to one of the preceding claims, **characterized in that**, in the uncoupled configuration of the coupling element (100, 200), the relief passage (P100; P200) emerges on the front face (108; 208).

13. The coupling element according to one of the preceding claims, **characterized in that**, in the uncoupled configuration of the coupling element (100; 200) and when the relief ring (124; 224) is in its first position, respective front faces (1048, 1168, 1248; 2048, 2248) of the closing off means (104, 116, 124; 204, 224) are aligned in a plane perpendicular to the longitudinal axis (X100, X200).

14. A quick coupling (2) for removably joining pressurized fluid pipes (C1, C2), this coupling member comprising a female coupling element (100) and a male coupling element (200) complementary to the female coupling element, **characterized in that** at least one of the coupling elements (100, 200) is according to one of the preceding claims.

15. The quick coupling according to claim 14, **characterized in that**, in the coupled configuration of the coupling (R), at least one mechanical member (104, 204, 224) for closing off the inner channel (C100; C200) of the coupling element (100; 200) is in a withdrawn position, where it defines, with the body (102; 202) of this coupling element, an annular passage for the flow (E_{R}) of the pressurized fluid.
